# EUROPÄISCHE PATENTSCHRIFT

(11) **EP 3 139 147 B1**
(45) Veröffentlichungstag und Bekanntmachung des Hinweises auf die Patenterteilung: **25.11.2020**
(21) Anmeldenummer: 15002589.8
(22) Anmeldetag: 02.09.2015
(51) Int. Cl.: G01M 11/02

(54) **VORRICHTUNG UND VERFAHREN ZUR MESSUNG EINER WELLENLÄNGENABHÄNGIGEN OPTISCHEN KENNGRÖSSE EINES OPTISCHEN SYSTEMS**
APPARATUS AND METHOD FOR MEASURING A WAVELENGTH DEPENDENT OPTICAL CHARACTERISTIC OF AN OPTICAL SYSTEM
DISPOSITIF ET PROCEDE DE MESURE D'UNE GRANDEUR NOMINALE OPTIQUE DEPENDANT DE LA LONGUEUR D'ONDE D'UN SYSTEME OPTIQUE

(43) Veröffentlichungstag der Anmeldung: 08.03.2017
(73) Patentinhaber: Trioptics GmbH, 22880 Wedel (DE)
(72) Erfinder: Ruprecht, Aiko, 22605 Hamburg (DE); Erichsen, Patrik, 25491 Hetlingen (DE); Winters, Daniel, 4050 Traun (AT)
(74) Vertreter: Ostertag & Partner Patentanwälte mbB

(56) Entgegenhaltungen:
- US-A- 5 657 116
- US-B1- 7 688 431

## Beschreibung

### HINTERGRUND DER ERFINDUNG

### 1. Gebiet der Erfindung

Die Erfindung betrifft eine Vorrichtung und ein Verfahren zur Messung einer wellenlängenabhängigen optischen Kenngröße eines Objektivs, einer Linse oder eines anderen optischen Systems. Bei der wellenlängenabhängigen optischen Kenngröße kann es sich insbesondere um die spektrale Modulationsübertragungsfunktion (MTF, *Modulation Transfer Function*), den spektralen Transmissionskoeffizienten T(λ), die chromatische Längsaberration oder die chromatische Queraberration handeln.

### 2. Beschreibung des Standes der Technik

Im Stand der Technik bekannt sind Vorrichtungen zur Messung der Modulationsübertragungsfunktion eines optischen Systems, bei denen in einer Brennebene des optischen Systems ein Lichtmuster, zum Beispiel ein Strich, ein Strichkreuz oder ein Punkt, erzeugt wird. Zu diesem Zweck kann beispielsweise eine Blende in der Brennebene des optischen Systems angeordnet werden, die von einer Lichtquelle beleuchtet wird und eine entsprechende Blendenöffnung aufweist. Das optische System bildet die Blendenöffnung ins Unendliche ab.

Auf der gegenüberliegenden Seite des optischen Systems ist eine Kamera angeordnet, die ein Objektiv und einen Lichtsensor aufweist, der in einer Brennebene des Objektivs angeordnet ist. Das Objekt bildet das Bild vom Unendlichen auf den Lichtsensor ab. Aus dem Bild auf dem Lichtsensor kann die Modulationsübertragungsfunktion abgeleitet werden. Es ist außerdem bekannt, eine Blende mit mehreren Blendenöffnungen zu verwenden und mehrere Kameras auf der gegenüberliegenden Seite des optischen Systems so verteilt anzuordnen, dass jede Kamera mit ihrem Lichtsensor das Bild von genau einer Blendenöffnung erfasst. Auf diese Weise kann die Modulationsübertragungsfunktion an mehreren Feldpositionen unabhängig voneinander gemessen werden.

Es sind außerdem Vorrichtungen bekannt, bei denen die Blende mit dem Muster aus Blendenöffnungen von einem Kollimator ins Unendliche abgebildet wird, so dass das zu vermessende optische System kollimiert beleuchtet wird. Das Objektiv der Kamera bildet dann ein Zwischenbild der Blende, das vom optischen System erzeugt wird, auf den Lichtsensor ab.

Um die Modulationsübertragungsfunktion für unterschiedliche Wellenlängen zu bestimmen, um daraus die spektrale Modulationsübertragungsfunktion MTF(Ä) abzuleiten, werden bislang Lichtquellen verwendet, deren Emissionsspektren sich diskret verändern lassen. Eine solche Lichtquelle kann beispielsweise mehrere LEDs mit unterschiedlichen Emissionswellenlängen aufweisen, die nacheinander in den Lichtweg eingeführt werden. Alternativ hierzu werden Weißlichtquellen eingesetzt, deren Licht mit Farbfiltern gefiltert wird, die austauschbar im Lichtweg angeordnet sind. Die Modulationsübertragungsfunktion wird dann nacheinander für jede Wellenlänge gesondert gemessen.

Wenn in produktionsnahen Anwendungen optische Systeme in großer Zahl vermessen werden sollen, ist eine solche Messung jedoch zu langsam.

Zur Messung des spektralen Transmissionskoeffizienten T(λ) wird Messlicht nach dem Durchtritt durch das optische System auf einen Spalt gerichtet, der über ein Prisma, ein Gitter oder ein anderes dispersives optisches Element auf einen Lichtsensor abgebildet wird.

Aus der US 7 688 431 B1 ist ein Gerät bekannt, mit dem man Kunden die Wirkung von chromatischen Abbildungsfehlern von Brillengläsern anschaulich darstellen kann. Bei einem Ausführungsbeispiel beleuchtet eine polychromatische Lichtquelle ein Objekt, das von einer Optik ins Unendliche abgebildet wird. Im kollimierten Strahlengang steht ein Brillenglas, in dessen Brennebene sich eine Blende befindet, die von einer weiteren Optik auf einen Lichtsensor abgebildet wird.

Aus der US 5 657 116 A ist ein Gerät bekannt, mit dem sich der spektrale Transmissionskoeffizient eines optischen Systems vermessen lässt. Zu diesem Zweck wir das optische System über ein Dispersionsprisma auf einen Lichtsensor abgebildet.

### ZUSAMMENFASSUNG DER ERFINDUNG

Aufgabe der Erfindung ist es daher, eine Vorrichtung anzugeben, mit der sich die wellenlängenabhängige Modulationsübertragungsfunktion oder eine andere optische Kenngröße eines optischen Systems schneller als bislang messen lässt.

Diese Aufgabe wird durch eine Vorrichtung zur Messung einer wellenlängenabhängigen optischen Kenngröße eines optischen Systems gelöst, die eine Lichtmuster-Erzeugungseinrichtung aufweist, die dazu eingerichtet ist, in einer Objektebene ein Muster aus polychromatischem Licht zu erzeugen. Die Vorrichtung weist außerdem einen ortsauflösenden Lichtsensor und eine Messoptik auf, die dazu eingerichtet ist, gemeinsam mit dem optischen System die Objektebene auf den Lichtsensor abzubilden. Erfindungsgemäß ist in einem Lichtweg zwischen dem optischen System und dem Lichtsensor ein dispersives optisches Element derart angeordnet, dass gleichzeitig mehrere Bilder des Musters mit unterschiedlichen Wellenlängen an unterschiedlichen Orten auf dem Lichtsensor entstehen. Eine Auswerteeinrichtung ist dazu eingerichtet, aus den mehreren Bildern die wellenlängenabhängige Kenngröße des optischen Systems zu bestimmen.

Durch die Verwendung des polychromatischen Lichts und des dispersiven Elements ist es möglich, die Bilder des Musters gleichzeitig für unterschiedliche Wellenlängen zu erfassen und auszuwerten. Wenn das polychromatische Licht ein diskretes Spektrum oder mehrere (schmale) kontinuierliche Spektren umfasst, die spektral voneinander beabstandet sind, so lässt sich damit beispielsweise die Modulationsübertragungsfunktion gleichzeitig für mehrere unterschiedliche Wellenlängen bestimmen.

Vorzugsweise erzeugt das optische System gemeinsam mit der Messoptik ein Zwischenbild des Musters, das auf den Lichtsensor abgebildet wird. Dieses Zwischenbild wird erfindungsgemäß als eine Art virtueller Eintrittsspalt für den Lichtweg der nachfolgenden spektrographischen Anordnung genutzt. In herkömmlichen Spektrographen ist die Lage des physikalischen Eintrittsspalts gegenüber dem dispersiven optischen Element und dem Lichtsensor durch den konstruktiven Aufbau festgelegt. Dadurch können Positionen auf dem Lichtsensor eindeutig Wellenlängen zugeordnet werden. Der virtuelle Eintrittsspalt, der bei der erfindungsgemäßen Vorrichtung vom optischen System erzeugt wird und im Endlichen oder auch im Unendlichen liegen kann, ist hingegen räumlich nicht gegenüber der Messoptik, dem dispersiven optischen Element und dem Lichtsensor fixiert. Dadurch lassen sich aus den vom Lichtsensor gewonnenen Ortsinformationen nur in begrenztem Umfang Rückschlüsse ziehen.

Diesen Problemen kann abgeholfen werden, wenn die Vorrichtung einen weiteren ortsauflösenden Lichtsensor aufweist und die Messoptik dazu eingerichtet ist, gemeinsam mit dem optischen System die Objektebene zusätzlich auf den weiteren Lichtsensor abzubilden, wobei im Strahlengang des weiteren Lichtsensors kein dispersives optisches Element angeordnet ist. Der weitere ortsauflösende Lichtsensor hat dann vor allem die Aufgabe, den Ort des vom optischen System erzeugten Bildes des Musters zu erfassen. Die Auswerteeinrichtung kann dann dazu eingerichtet sein, aus dem Bild des Musters auf dem weiteren Lichtsensor einen durch eine Verkippung des optischen Systems verursachten Versatz der Bilder des Musters auf dem Lichtsensor abzuleiten und diese zur Korrektur der vom Lichtsensor gewonnenen Ortsinformationen zu verwenden.

Es ist auch möglich, polychromatisches Licht zu verwenden, das ein breiteres kontinuierliches Spektrum umfasst. Die Bilder des Musters können dann in der Regel nicht mehr auf dem Lichtsensor voneinander unterschieden werden. Durch die intensitätsmäßige Auswertung des vom Lichtsensor erfassten Spektrums lässt sich aber auf einfache Weise direkt der spektrale Transmissionskoeffizient des zu vermessenden optischen Systems ableiten. Durch Wechsel des Spektrums des polychromatischen Lichts kann somit beispielsweise rasch zwischen einer Messung der spektralen Modulationsübertragungsfunktion für ausgewählte Wellenlängen und der Messung des spektralen Transmissionskoeffizienten über einem größeren Wellenlängenbereich gewechselt werden.

Damit Licht mit einem diskreten Spektrum oder mehreren spektral voneinander getrennten kontinuierlichen Spektren auf den Lichtsensor auftrifft, kann eine Lichtquelle verwendet werden, die ein kontinuierliches Spektrum erzeugt. Die spektrale Filterung kann dann im Lichtweg des Lichts durch ein optisches Kammfilter oder ein anderes Spektralfilter bewirkt werden, das beispielsweise zwischen dem zu vermessenden optischen System und dem Lichtsensor angeordnet sein kann.

Ein Spektralfilter kann auch dann zweckmäßig sein, wenn die diskreten Wellenlängen oder die spektral voneinander getrennten Spektren so dicht zueinander beabstandet sind, dass sich die Bilder des Musters auf dem Lichtsensor überlappen. Mit Hilfe eines Spektralfilters lassen sich dann Bilder auf dem Lichtsensor ausblenden, so dass andere Bilder besser detektiert werden können. Das Spektralfilter kann dabei beispielsweise in einem Austauschhalter angeordnet sein, in dem sich mindestens ein weiteres Spektralfilter mit anderen spektralen Eigenschaften befindet. Dann können durch Austausch des Spektralfilters rasch unterschiedliche Bilder auf dem Lichtsensor ausgeblendet werden.

Bei einem Ausführungsbeispiel ist die Messoptik dazu eingerichtet, das optische System mit kollimiertem Licht zu beleuchten. Die Messoptik weist dann vorzugsweise einen Kondensor auf, in dessen Brennebene das Muster angeordnet ist.

Um eine Anpassung an die unterschiedlichen Brennweiten des zu vermessenden optischen Systems durchführen zu können, kann ein zwischen dem optischen System und dem Lichtsensor angeordneter Teil der Messoptik eine Brennebene hat, die axial verstellbar ist. Zum Zwecke der Verstellung kann eine einzelne Linse oder auch die gesamte Messoptik entlang der optischen Achse des optischen Systems verfahren werden.

Bei einem anderen Ausführungsbeispiel erzeugt das optische System ein im Unendlichen liegendes Zwischenbild des Musters, das von der Messoptik auf den Lichtsensor abgebildet wird.

Die Lichtmuster-Erzeugungseinrichtung kann eine Lichtquelle und eine von der Lichtquelle ausleuchtbare Blende mit einer Blendenöffnung aufweisen. Auch die Verwendung selbstleuchtender Lichtmuster, z. B. eine Anordnung von LEDs, kommt als Lichtmuster-Erzeugungseinrichtung in Betracht.

Neben der spektralen Modulationsübertragungsfunktion und dem spektralen Transmissionskoeffizienten können mit Hilfe der erfindungsgemäßen Vorrichtung auch andere spektrale Kenngrößen, z. B. die chromatische Längsaberration oder die chromatische Queraberration, des optischen Systems bestimmt werden.

Aufgabe der Erfindung ist es außerdem, ein Verfahren Vorrichtung anzugeben, mit dem sich die wellenlängenabhängige Modulationsübertragungsfunktion oder eine andere optische Kenngröße eines optischen Systems schneller als bislang messen lässt.

Diese Aufgabe wird gelöst durch ein Verfahren zur Messung einer wellenlängenabhängigen optischen Kenngröße eines optischen Systems, das die folgenden Schritte umfasst:
a) Erzeugen eines Musters aus polychromatischem Licht in einer Objektebene;
b) Abbilden des Musters auf einen ortsauflösenden Lichtsensor unter Verwendung des optischen Systems und einer Messoptik, wobei sich in einem Lichtweg zwischen dem optischen System und dem Lichtsensor ein dispersives optisches Element befindet, so dass gleichzeitig mehrere Bilder des Musters mit unterschiedlichen Wellenlängen an unterschiedlichen Orten auf dem Lichtsensor entstehen;
c) Bestimmen der optischen Kenngröße aus den mehreren Bildern auf dem Lichtsensor.

Das optische System kann eine Zwischenbild des Musters erzeugen, das auf dem Lichtsensor abgebildet wird. Die Messoptik kann dann gemeinsam mit dem optischen System die Objektebene zusätzlich auf einen weiteren Lichtsensor abbilden, wobei im Lichtweg des weiteren Lichtsensors kein dispersives optisches Element angeordnet ist. Aus dem Bild des Musters auf dem weiteren Lichtsensor kann dann ein durch eine Verkippung des optischen Systems verursachter Versatz der Bilder des Musters auf dem Lichtsensor abgeleitet und zur Korrektur des Zusammenhangs zwischen Wellenlängen und den Orten auf dem einen Lichtsensor verwendet werden.

Das polychromatische Licht kann ein diskretes Spektrum oder mehrere kontinuierliche Spektren umfasst, die spektral voneinander beabstandet sind. Alternativ hierzu kann das polychromatische Licht ein kontinuierliches Spektrum umfassen.

Zwischen dem optischen System und dem Lichtsensor kann das Licht spektral gefiltert werden.

In einem Ausführungsbeispiel beleuchtet die Messoptik das optische System mit kollimiertem Licht. Die Messoptik kann hierzu einen Kondensor aufweisen, in dessen Brennebene das Muster angeordnet ist. Ein zwischen dem optischen System und dem Lichtsensor angeordneter Teil der Messoptik kann dabei eine Brennebene haben, die axial verstellbar ist.

Bei einem anderen Ausführungsbeispiel erzeugt das optische System ein im Unendlichen liegendes Zwischenbild des Musters, das von der Messoptik auf den Lichtsensor abgebildet wird. Zur Erzeugung des Musters kann eine Lichtquelle eine Blende mit einer Blendenöffnung beleuchten.

Bei der optischen Kenngröße kann es sich um die spektrale Modulationsübertragungsfunktion, den spektralen Transmissionskoeffizienten, die chromatische Längsaberration oder die chromatische Queraberration handeln.

### KURZE BESCHREIBUNG DER ZEICHNUNGEN

Weitere Merkmale und Vorteile der Erfindung ergeben sich aus der nachfolgenden Beschreibung der Ausführungsbeispiele anhand der Zeichnungen. Darin zeigen:
- Figur 1: eine erfindungsgemäße Messvorrichtung in einem schematischen meridionalen Schnitt gemäß einem ersten Ausführungsbeispiel;
- Figur 2: eine Draufsicht auf eine Blende der in der Figur 1 gezeigten Messvorrichtung;
- Figur 3: das Spektrum des für die Messung verwendeten Lichts beim Auftreffen auf den Lichtsensor;
- Figur 4: eine Anordnung mehrerer farbiger Bilder der Blendenöffnung auf dem Lichtsensor;
- Figur 5: das Bild der Blendenöffnung auf einem weiteren Lichtsensor;
- Figur 6: ein anderes Spektrum des für die Messung verwendeten Lichts beim Auftreffen auf den Lichtsensor;
- Figur 7: eine Anordnung der farbigen Bilder der Blendenöffnung auf dem Lichtsensor bei Verwendung des Lichts mit dem in der Figur 6 gezeigten Spektrum;
- Figur 8: eine Draufsicht auf andere Blende der Messvorrichtung, wenn diese in einer zweiten Betriebsart zur Messung des spektralen Transmissionskoeffizienten verwendet wird;
- Figur 9: das Spektrum des Lichts in der zweiten Betriebsart;
- Figur 10: eine schematische Darstellung der Lichtverteilung auf dem Lichtsensor in der zweiten Betriebsart;
- Figur 11: eine beispielhafte spektrale Intensitätsverteilung des Lichts beim Auftreffen auf den Lichtsensor in der zweiten Betriebsart;
- Figur 12: eine an die Figur 1 angelehnte Darstellung einer Messvorrichtung gemäß einem zweiten Ausführungsbeispiel der Erfindung.

### BESCHREIBUNG BEVORZUGTER AUSFÜHRUNGSBEISPIELE

### 1. Erstes Ausführungsbeispiel

### a) Aufbau

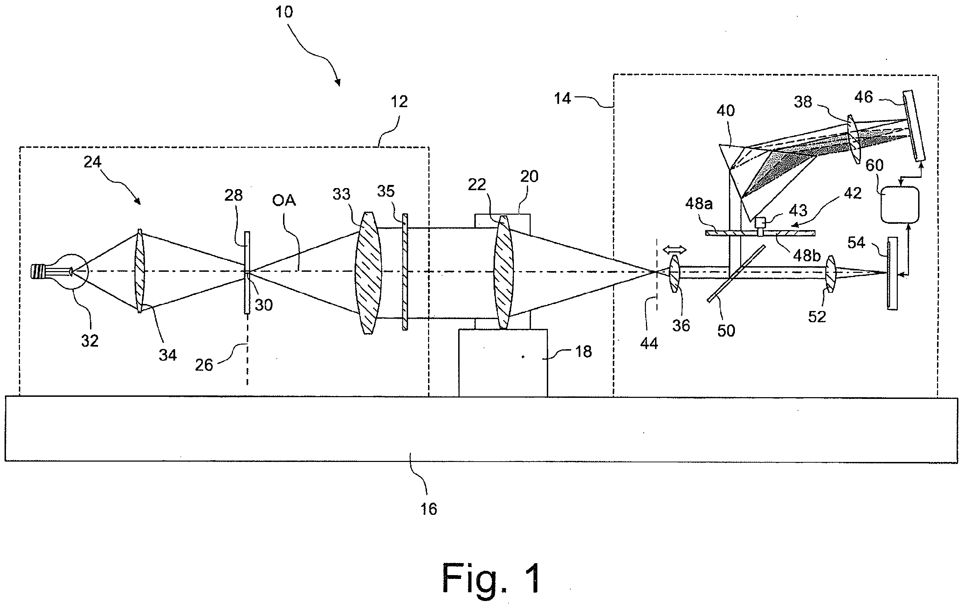

Die Figur 1 zeigt eine erfindungsgemäße und insgesamt mit 10 bezeichnete Messvorrichtung in einem schematischen meridionalen Schnitt.

Die Messvorrichtung 10 umfasst eine Beleuchtungseinheit 12 und eine Messeinheit 14, die auf einem gemeinsamen Träger 16 befestigt sind. Der Träger 16 trägt außerdem einen Halter 18, der zwischen der Beleuchtungseinheit 12 und der Messeinheit 14 angeordnet und zur Aufnahme eines zu vermessenden optischen Systems 20 ausgebildet ist. Im dargestellten Ausführungsbeispiel umfasst das optische System 20 lediglich eine einzelne Linse 22; selbstverständlich können auch optische Systeme 20 vermessen werden, die mehrere Linsen und andere optische Elemente enthalten.

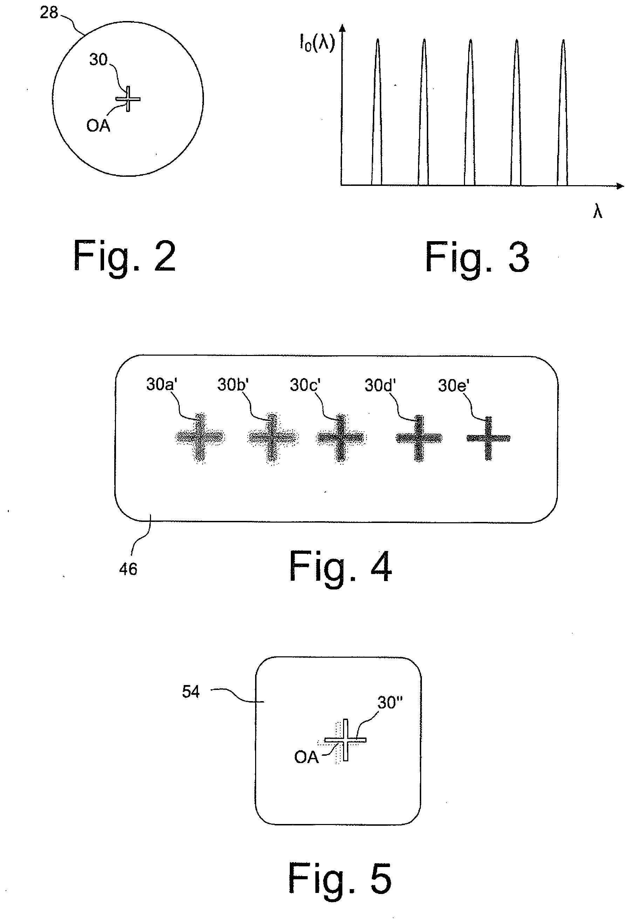

Die Beleuchtungseinheit 12 umfasst eine Lichtmuster-Erzeugungseinrichtung 24, mit der in einer Objektebene 26 ein Lichtmuster erzeugbar ist. Zu diesem Zweck weist die Lichtmuster-Erzeugungseinrichtung 24 eine Blende 28 mit einer Blendenöffnung 30 auf, die in der Figur 2 in einer Draufsicht gezeigt ist. Im dargestellten Ausführungsbeispiel hat die Blendenöffnung 30 die Form eines Fadenkreuzes, d.h. einer gekreuzten Anordnung zweier schmaler Spalte. Beleuchtet wird die Blende 28 von einer Lichtquelle 32, deren Licht über eine Sammellinse 34 auf die Blendenöffnung 30 gerichtet wird. Die Lichtquelle 32 erzeugt polychromatisches Licht mit einem breiten kontinuierlichen Spektrum.

Im Lichtweg hinter der Blende 28 sind ein Kondensor 33 und ein Spektralfilter 35 angeordnet. Das Spektralfilter 35 ist als optisches Kammfilter ausgebildet und hat einen spektralen Transmissionskoeffizienten T(λ), der in der Figur 3 qualitativ gezeigt ist. Nach dem Durchtritt durch das Spektralfilter 35 hat das polychromatische Licht kein kontinuierliches Spektrum mehr, sondern ein diskretes Spektrum. Ein Beispiel für ein geeignetes optisches Kammfilter ist in der US 5,225,930 A beschrieben. Es können aber auch andere optische Kammfilter eingesetzt werden, z. B. Filter, die auf dem Prinzip eines Fabry-Perot-Interferometers beruhen. Polychromatisches Licht mit einem diskreten Spektrum kann auch ohne ein Kammfilter erzeugt werden, wenn Licht aus mehreren Lichtwegen überlagert wird, in denen jeweils ein Spektralfilter angeordnet ist, das nur für Licht einer bestimmten Wellenlänge durchlässig ist.

Die Messeinheit 14 umfasst eine erste Sammellinse 36, die entlang einer optischen Achse OA verschiebbar ist, und eine zweite Sammellinse 38. Zwischen den Sammellinsen 36, 38 sind ein Dispersionsprisma 40, wie es typischerweise in Prismenspektrometern enthalten ist, und ein Filterrad 42 angeordnet. Die beiden Sammellinsen 36, 38 bilden eine Zwischenbildebene 44, deren axiale Position durch Verschieben der ersten Sammellinse 36 veränderbar ist, auf einen ersten ortsauflösenden Lichtsensor 46 ab. Dieser kann beispielsweise als CCD-Sensor ausgebildet sein und umfasst ein Array von Pixeln, welche die Intensität des auftreffenden Lichts im Wesentlichen wellenlängenunabhängig erfassen. Das Filterrad 42 umfasst mehrere um eine gemeinsame Achse herum angeordnete Spektralfilter 48a, 48b, die für unterschiedliche Spektralbereiche durchlässig sind. Mit Hilfe eines Antriebs 43 kann das Filterrad 42 so um die gemeinsame Achse gedreht werden, dass sich höchstens eines der Spektralfilter 48a, 48b im Lichtweg befindet.

Im Lichtweg zwischen der ersten Sammellinse 36 und dem Filterrad 42 befindet sich ein Strahlteiler 50, der einen Teil des einfallenden Lichts über eine dritte Sammellinse 52 auf einen zweiten Lichtsensor 54 richtet, der ebenfalls als CCD-Sensor ausgebildet ist. Die erste Sammellinse 36 und die dritte Sammellinse 52 bilden dabei die Zwischenbildebene 44 auf den zweiten Lichtsensor 54 ab.

Im Folgenden wird mit Bezug auf die Figuren 4 bis 11 die Funktion der Messvorrichtung 10 näher erläutert.

### b) Funktion

Beim Beleuchten der Blendenöffnung 30 mit Licht wird diese über den Kondensor 33 und das optische System 20 auf die Zwischenbildebene 44 abgebildet. Das dort entstehende reelle Zwischenbild wird dann von den Linsen 36 und 38 bzw. 52 auf die beiden Lichtsensoren 46 und 54 abgebildet. Da die Zwischenbildebene 44 mit der hinteren Brennebene des optischen Systems 20 zusammenfällt, hängt die axiale Position der Zwischenbildebene 44 von der Brennweite des optischen Systems 20 ab. Um die Zwischenbildebene 44 scharf auf die Lichtsensoren 46 und 54 abbilden zu können, wird die erste Linse 36 axial so verschoben, dass ihre Brennebene mit der Brennebene des optischen Systems 20 zusammenfällt. In der Figur 1 ist dieser Justiervorgang durch einen Doppelpfeil angedeutet. Alternativ hierzu kann auch die gesamte Messeinheit 14 axial verfahren werden, oder es wird eine Linse 36 verwendet, die eine variable Brennweite hat, wie dies etwa bei Flüssiglinsen der Fall ist.

Die Figur 4 zeigt die farbigen Bilder 30a' bis 30e' der fadenkreuzförmigen Blendenöffnungen 30, wie sie auf dem ersten Lichtsensor 46 infolge der spektralen Aufspaltung durch das Dispersionsprisma 40 entstehen. Jede der in der Figur 3 gezeigten Wellenlängen, für die das Spektralfilter 35 durchlässig ist, erzeugt dabei genau ein Bild auf dem ersten Lichtsensor 46. Die Bilder 30a' bis 30e' sind dabei in der Papierebene der Figur 1 nebeneinander aufgereiht, wie dies in der Figur 1 durch die verschieden dunkel eingefärbten Lichtwege für drei Wellenlängen angedeutet ist.

In der Figur 4 ist erkennbar, dass die Bilder 30a' bis 30e' nicht identisch sind. Der relative Bildkontrast und damit die Modulationsübertragungsfunktion MTF des optischen Systems 20 hängen im Allgemeinen von der Wellenlänge des Lichts ab. Da die Bilder 30a' bis 30e' unterschiedliche Farben haben (wobei die Wellenlängen des Lichts auch außerhalb des für den Menschen sichtbaren Spektrums liegen können), unterscheidet sich im Allgemeinen der relative Kontrast der Bilder 30a' bis 30e', wodurch diese unterschiedlich "verwaschen" auf dem ersten Lichtsensor 46 erscheinen. Durch Fourier-Analyse der Bilder 30a' bis 30e' lässt sich die Modulationsübertragungsfunktion MTF des optischen Systems 20 bestimmen, und zwar gleichzeitig für alle in der Figur 3 gezeigten Wellenlängen und ohne dass optische Elemente in den Lichtweg eingeführt oder andere Verfahrvorgänge vorgenommen werden müssen. Wird als Blendenöffnung 30 anstelle des Fadenkreuzes ein Einzelspalt verwendet, so lässt sich die Modulationsübertragungsfunktion MTF nur in einer Bildrichtung bestimmen. Bei einer punktförmigen Blendenöffnung 30 lassen sich für alle Richtungen innerhalb der Bildebene Werte für die Modulationsübertragungsfunktion MTF ableiten.

Aus den Bildern 30a' bis 30e' lassen sich auch in an sich bekannter Weise Aussagen über die chromatische Längs- und Queraberration ableiten.

Wenn die Modulationsübertragungsfunktion MTF nicht nur für einen axialen Bildpunkt bestimmt werden soll, sondern auch für einen oder mehrere außeraxiale Bildpunkte, so kann man die Blende 28 in der Blendenöffnung 30 in der Objektebene 26 verschieben oder die Beleuchtungseinheit 12 verkippen und die Messung wiederholen. Das Licht tritt dann immer noch kollimiert, aber zur optischen Achse geneigt auf das optische System 20, wodurch auch die farbigen Bilder auf dem ersten Lichtsensor 46 lateral verschoben werden.

### c) Virtueller Eintrittspalt

Bei einem herkömmlichen Gitter- oder Prismenspektrometer wird in der Regel ein durch eine feste physikalische Blende definierter Eintrittsspalt auf einen Lichtsensor abgebildet. Infolge der Dispersion des Prismas oder des Gitters ist dann jedem Ort auf dem Lichtsensor exakt eine Wellenlänge zugeordnet.

Bei der Messvorrichtung 10 ist der Ort des Bildes der Blendenöffnung 30 in der Zwischenbildebene 44 jedoch nicht exakt festgelegt. Falls das optische System 20 beispielsweise geringfügig relativ zur optischen Achse OA der Messvorrichtung 10 verkippt oder verschoben ist, wandert das Bild der Blendenöffnung 30 in der Zwischenbildebene 44 von der optischen Achse OA weg. Auch wenn - wie vorstehend erläutert - die Modulationsübertragungsfunktion MTF für außeraxiale Objektpunkte bestimmt werden soll, befindet sich das Bild der Blendenöffnung 30 in der Zwischenbildebene 44 nicht mehr auf der optischen Achse OA. Den Orten auf dem ersten Lichtsensor 46 können deswegen nicht mehr eindeutig Wellenlängen zugeordnet werden. Dies führt unter anderem dazu, dass für den ersten Lichtsensor 46 nicht erkennbar ist, ob und inwieweit eine Verschiebung eines der Bilder 30a' bis 30e' auf eine Verkippung des optischen Systems 20 oder auf eine Abbildungseigenschaft des optischen Systems 20 zurückgeht, die nur bei einer bestimmten Wellenlänge auftritt.

Um die damit verbundenen Unsicherheiten auszuschließen, wird das Bild der Blendenöffnung 30 auf dem zweiten Lichtsensor 54 verwendet, das in der Figur 5 gezeigt ist. Bei einem perfekt zur optischen Achse der Messvorrichtung 10 ausgerichteten optischen System 20 wäre das Bild der Blendenöffnung 30 auf der optischen Achse OA zentriert, wie dies in der Figur 5 durch gepunktete Linien angedeutet ist. Bei einer Verkippung des optischen Systems 20 wandert das Bild von der optischen Achse OA weg (vgl. durchgezogene Linien). Die gleiche Wanderungsbewegung vollziehen aber auch die farbigen Bilder 30a' bis 30e' auf dem ersten Lichtsensor 46. Rechnet man den Versatz heraus, den man mit Hilfe des zweiten Lichtsensors 54 gemessen hat und der z. B. auf eine Verkippung des optischen Systems 20 zurückgeht, so lassen sich aus den Positionen der Bilder 30a' bis 30e' auf dem ersten Lichtsensor 46 wellenlängenspezifische Abbildungseigenschaften des optischen Systems 20 mit hoher Genauigkeit bestimmen.

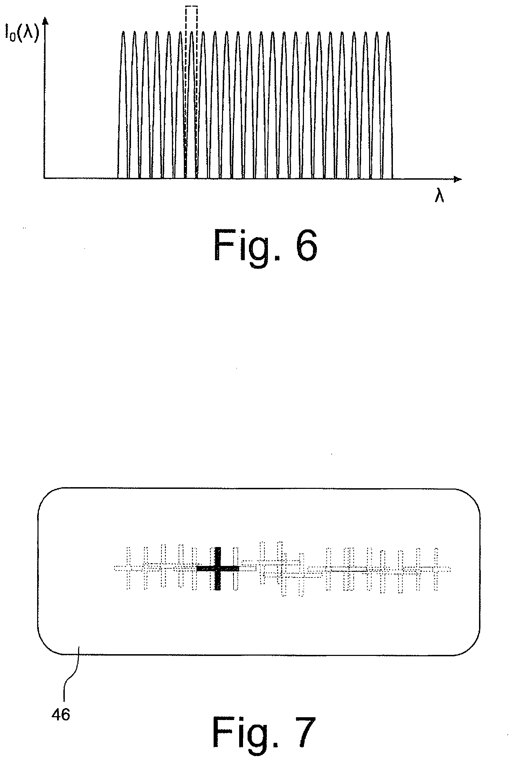

Wenn die Wellenlängen des vom Spektralfilter 35 ausgehenden Lichts sehr dicht beieinander liegen, wie dies die Figur 6 illustriert, so können sich die Bilder der Blendenöffnung 30 auf dem ersten Lichtsensor 46 überlappen, wie dies die Figur 7 mit gepunkteten Linien andeutet. In diesem Fall kann es schwierig sein, die Modulationsübertragungsfunktion MTF zumindest in einer der beiden Bildrichtungen zu bestimmen.

Um einzelne Bilder aus dem ersten Lichtsensor 46 durch Unterdrückung der übrigen Bilder hervorzuheben, kann das Filterrad 42 mit Hilfe des Antriebs 43 in eine solche Drehstellung gebracht werden, dass eines der Spektralfilter 48a, 48b in den Lichtweg eingeführt wird und nur Licht derjenigen Wellenlänge durchlässt, die auf dem ersten Lichtsensor 46 herausgestellt werden soll. Die unerwünschten Bilder werden dadurch auf dem ersten Lichtsensor 46 unterdrückt. Wenn die Spektralfilter 48a, 48b ebenfalls als Kammfilter ausgebildet sind, deren Periode aber ein ganzzahliges Vielfaches der Periode des Spektralfilters 35 ist, können auch ganze Gruppen von farbigen Bildern auf dem Lichtsensor 46 freigestellt werden.

### d) Messung des spektralen Transmissionskoeffizienten

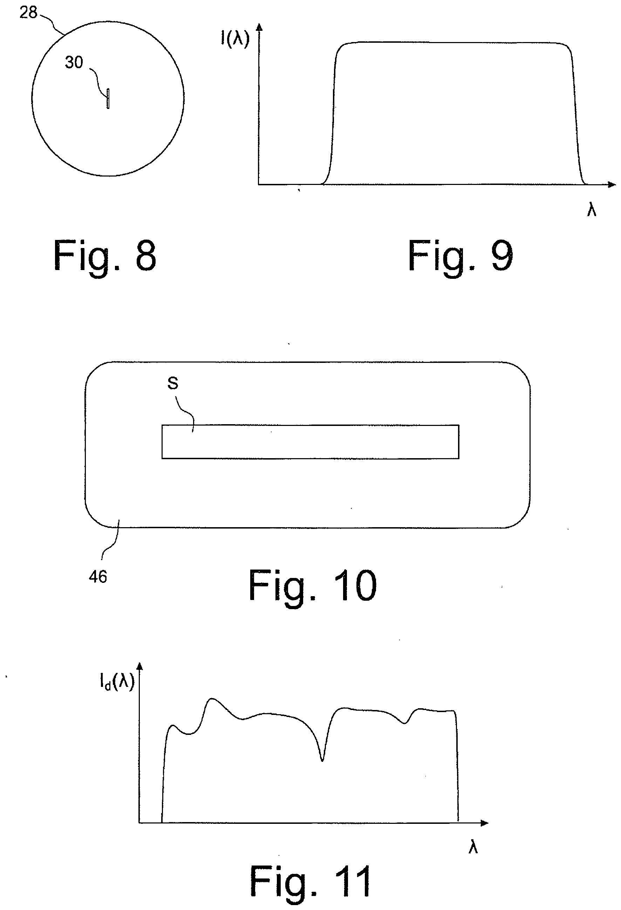

Mit Hilfe der Messvorrichtung 10 ist es außerdem möglich, den spektralen Transmissionskoeffizienten T(λ) des optischen Systems 20 zu messen. Hierzu wird eine Blende 28 mit einer Blendenöffnung 30 verwendet, die als Einzelspalt ausgeführt und in der Figur 8 gezeigt ist. Außerdem wird das Spektralfilter 35 aus dem Lichtweg entfernt, so dass Licht mit einem kontinuierlichen Spektrum (vgl. Figur 9) auf die Lichtsensoren 46 und 54 auftrifft.

Dementsprechend überlagern sich auch die Bilder der Blendenöffnung 30 kontinuierlich auf dem Lichtsensor 46. Dies führt zu einer streifenförmigen Intensitätsverteilung S auf dem ersten Lichtsensor 46, wie sie in der Figur 10 illustriert. Da das optische System 20 im Allgemeinen jedoch einen Transmissionskoeffizienten T hat, der wellenlängenabhängig ist, sind die Intensitäten des Lichts innerhalb des Streifens S nicht konstant, sondern variieren über dessen Längsrichtung. Da den Längspositionen Wellenlängen entsprechen, kann aus dem vom ersten Lichtsensor 46 erfassten örtlichen Intensitätsverlauf direkt die Abhängigkeit der detektierten Intensität I_{d}(λ) von der Wellenlänge λ berechnet werden, wie sie in der Figur 11 gezeigt ist. Aus dieser Abhängigkeit kann direkt auf den spektralen Transmissionskoeffizienten T(λ) zurückgeschlossen werden, wenn der Intensitätsverlauf des Lichts vor dem Durchtritt durch das optische System 20 bekannt ist.

### 2. Zweites Ausführungsbeispiel

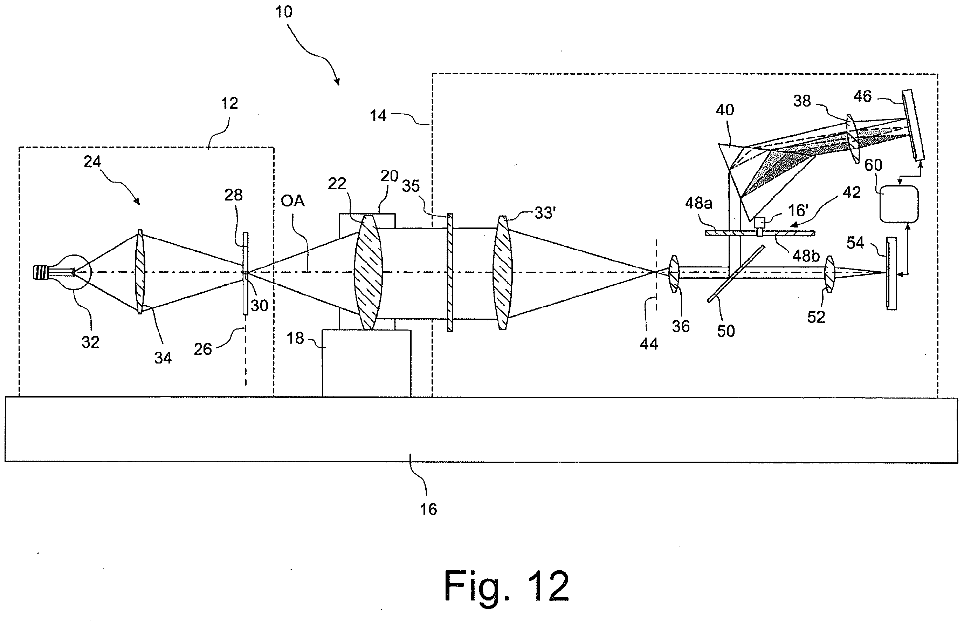

Die Figur 12 zeigt in einer der Figur 1 angelegten Darstellung eine Messvorrichtung 10 gemäß einem zweiten Ausführungsbeispiel. Das optische System 20 ist dort so angeordnet, dass seine vordere Brennebene mit der Objektebene 26 zusammenfällt, in der die Blende 28 angeordnet ist. Im kollimierten Strahlengang hinter dem optischen System befindet sich bei diesem Ausführungsbeispiel das Spektralfilter 35 und ein Kondensor 33', der gemeinsam mit dem optischen System 20 die Objektebene 26 auf die Zwischenbildebene 44 abbildet.

Ansonsten entspricht die Funktion der Messvorrichtung 10 derjenigen des ersten Ausführungsbeispiels.

## Patentansprüche

1. Vorrichtung zur Messung einer wellenlängenabhängigen optischen Kenngröße eines optischen Systems (20), mit:
a) einer Lichtmuster-Erzeugungseinrichtung (24), die dazu eingerichtet ist, in einer Objektebene (26) ein Muster aus polychromatischem Licht zu erzeugen,
b) einem ortsauflösenden Lichtsensor (46),
c) einer Messoptik (33, 36, 38; 33'), die dazu eingerichtet ist, gemeinsam mit dem optischen System (20) die Objektebene (26) auf den Lichtsensor (46) abzubilden,
**dadurch gekennzeichnet, dass**
in einem Lichtweg zwischen dem optischen System und dem Lichtsensor ein dispersives optischen Element (40) derart angeordnet ist, dass gleichzeitig mehrere Bilder (30a' bis 30e') des Musters mit unterschiedlichen Wellenlängen an unterschiedlichen Orten auf dem Lichtsensor (46) entstehen, und dass
die Vorrichtung eine Auswerteeinrichtung (60) aufweist, die dazu eingerichtet ist, aus den mehreren Bildern die wellenlängenabhängige Kenngröße des optischen Systems (20) zu bestimmen.

2. Vorrichtung nach Anspruch 1, **dadurch gekennzeichnet, dass** das optische System gemeinsam mit der Messoptik ein Zwischenbild des Musters erzeugt, das auf den Lichtsensor (46) abgebildet wird.

3. Vorrichtung nach Anspruch 2, **dadurch gekennzeichnet, dass** die Vorrichtung einen weiteren ortsauflösenden Lichtsensor (54) aufweist, und dass die Messoptik (33, 36, 52) ferner dazu eingerichtet ist, gemeinsam mit dem optischen System (20) die Objektebene (26) zusätzlich auf den weiteren Lichtsensor (54) abzubilden, wobei im Lichtweg des weiteren Lichtsensors kein dispersives optisches Element angeordnet ist.

4. Vorrichtung nach Anspruch 3, **dadurch gekennzeichnet, dass** die Auswerteeinrichtung (60) dazu eingerichtet ist, aus dem Bild des Musters auf dem weiteren Lichtsensor (54) einen durch eine Verkippung des optischen Systems (20) verursachten Versatz der Bilder (30a' bis 30e') des Musters auf dem Lichtsensor (46) abzuleiten und dies zur Korrektur der vom Lichtsensor (46) gewonnenen Ortsinformationen zu verwenden.

5. Vorrichtung nach einem der vorhergehenden Ansprüche, **dadurch gekennzeichnet, dass** das polychromatische Licht ein diskretes Spektrum oder mehrere kontinuierliche Spektren umfasst, die spektral voneinander beabstandet sind.

6. Vorrichtung nach einem der Ansprüche 1 bis 4, **dadurch gekennzeichnet, dass** das polychromatische Licht ein kontinuierliches Spektrum umfasst.

7. Verfahren zur Messung einer wellenlängenabhängigen optischen Kenngröße eines optischen Systems, umfassend die folgenden Schritte:
a) Erzeugen eines Musters aus polychromatischem Licht in einer Objektebene (26);
b) Abbilden des Musters auf einen ortsauflösenden Lichtsensor (46) unter Verwendung des optischen Systems (20) und einer Messoptik (33; 33'), wobei sich in einem Lichtweg zwischen dem optischen System und dem Lichtsensor ein dispersives optisches Element (40) befindet, so dass gleichzeitig mehrere Bilder (30a' bis 30e') des Musters mit unterschiedlichen Wellenlängen an unterschiedlichen Orten auf dem Lichtsensor (46) entstehen;
c) Bestimmen der optischen Kenngröße aus den mehreren Bildern auf dem Lichtsensor (46).

8. Verfahren nach Anspruch 7, **dadurch gekennzeichnet, dass** das optische System (20) gemeinsam mit der Messoptik (33; 33') ein Zwischenbild des Musters erzeugt, das auf den Lichtsensor (46) abgebildet wird.

9. Verfahren nach Anspruch 8, **dadurch gekennzeichnet, dass** die Messoptik gemeinsam mit dem optischen System die Objektebene zusätzlich auf einen weiteren Lichtsensor (54) abbildet, wobei im Lichtweg des weiteren Lichtsensors (54) kein dispersives optisches Element angeordnet ist.

10. Verfahren nach Anspruch 9, **dadurch gekennzeichnet, dass** aus dem Bild des Musters auf dem weiteren Lichtsensor (54) ein durch eine Verkippung des optischen Systems (20) verursachter Versatz der Bilder (30a' bis 30e') des Musters auf dem Lichtsensor (46) abgeleitet und zur Korrektur der vom Lichtsensor (46) gewonnenen Ortsinformationen verwendet wird.

11. Verfahren nach einem der Ansprüche 7 bis 10, **dadurch gekennzeichnet, dass** das polychromatische Licht ein diskretes Spektrum oder mehrere kontinuierliche Spektren umfasst, die spektral voneinander beabstandet sind.

## Claims

1. Apparatus for measuring a wavelength-dependent optical characteristic of an optical system (20), comprising:
a) a light-pattern generation device (24) configured to generate a pattern of polychromatic light in an object plane (26),
b) a spatially resolving light sensor (46),
c) a measuring optical unit (33, 36, 38; 33') configured, together with the optical system (20), to image the object plane (26) on the light sensor (46),
**characterized in that**
a dispersive optical element (40) is arranged in a light path between the optical system and the light sensor in such a way that a plurality of images (30a' to 30e') of the pattern with different wavelengths are generated simultaneously at different locations on the light sensor (46), and **in that**
the apparatus has an evaluation device (60) configured to determine the wavelength-dependent characteristic of the optical system (20) from the plurality of images.

2. Apparatus according to Claim 1, **characterized in that** the optical system, together with the measuring optical unit, generates an intermediate image of the pattern which is imaged on the light sensor (46).

3. Apparatus according to Claim 2, **characterized in that** the apparatus has a further spatially resolving light sensor (54) and **in that** the measuring optical unit (33, 36, 52) is furthermore configured, together with the optical system (20), to additionally image the object plane (26) on the further light sensor (54), with no dispersive optical element being arranged in the light path of the further light sensor.

4. Apparatus according to Claim 3, **characterized in that** the evaluation device (60) is configured to derive, from the image of the pattern on the further light sensor (54), an offset of the images (30a' to 30e') of the pattern on the light sensor (46) caused by a tilt of the optical system (20), and to use this information to correct the spatial information obtained by the light sensor (46).

5. Apparatus according to one of the preceding claims, **characterized in that** the polychromatic light comprises a discrete spectrum or a plurality of continuous spectra, which are spectrally spaced apart.

6. Apparatus according to one of Claims 1 to 4, **characterized in that** the polychromatic light comprises a continuous spectrum.

7. Method for measuring a wavelength-dependent optical characteristic of an optical system, comprising the following steps:
a) generating a pattern of polychromatic light in an object plane (26);
b) imaging the pattern on a spatially resolving light sensor (46) using the optical system (20) and a measuring optical unit (33; 33'), with a dispersive optical element (40) being situated in a light path between the optical system and the light sensor such that a plurality of images (30a' to 30e') of the pattern with different wavelengths are generated simultaneously at different locations on the light sensor (46);
c) determining the optical characteristics from the plurality of images on the light sensor (46).

8. Method according to Claim 7, **characterized in that** the optical system (20), together with the measuring optical unit (33; 33'), generates an intermediate image of the pattern which is imaged on the light sensor (46).

9. Method according to Claim 8, **characterized in that** the measuring optical unit, together with the optical system, additionally images the object plane on a further light sensor (54), with no dispersive optical element being arranged in the light path of the further light sensor (54).

10. Method according to Claim 9, **characterized in that** an offset of the images (30a' to 30e') of the pattern on the light sensor (46) caused by a tilt of the optical system (20) is derived from the image of the pattern on the further light sensor (54) and used to correct the spatial information obtained by the light sensor (46).

11. Method according to one of Claims 7 to 10, **characterized in that** the polychromatic light comprises a discrete spectrum or a plurality of continuous spectra, which are spectrally spaced apart.

## Revendications

1. Dispositif de mesure d'une grandeur nominale optique dépendant de la longueur d'onde d'un système optique (20), comprenant :
a) un moyen de génération de motif lumineux (24), qui est conçu pour générer un motif de lumière polychromatique dans un plan objet (26),
b) un capteur de lumière à résolution spatiale (46),
c) une optique de mesure (33, 36, 38 ; 33'), qui est conçue pour former une image du plan objet (26) sur le capteur de lumière (46) en association avec l'optique (20),
**caractérisé en ce qu'**un élément optique dispersif (40) est disposé sur un chemin optique entre le système optique et le capteur de lumière de telle manière qu'une pluralité d'images (30a' à 30e') du motif présentant des longueurs d'onde différentes soient formées simultanément à différentes positions sur le capteur de lumière (46), et **en ce que**
le dispositif comporte un dispositif d'évaluation (60), qui est conçu pour déterminer à partir de la pluralité d'images la grandeur nominale dépendant de la longueur d'onde du système optique (20).

2. Dispositif selon la revendication 1, **caractérisé en ce que** le système optique, en association avec l'optique de mesure, génère une image intermédiaire du motif, dont l'image est formée sur le capteur de lumière (46).

3. Dispositif selon la revendication 2, **caractérisé en ce que** le dispositif comporte un autre capteur de lumière à résolution spatiale (54), et **en ce que** l'optique de mesure (33, 36, 52) est en outre conçue pour former une autre image du plan objet (26) sur l'autre capteur de lumière (54) en association avec le système optique (20), dans lequel aucun élément optique dispersif n'est disposé sur le chemin optique de l'autre capteur de lumière.

4. Dispositif selon la revendication 3, **caractérisé en ce que** le dispositif d'évaluation (60) est conçu pour déduire de l'image du motif formée sur l'autre capteur de lumière (54) un décalage des images (30a' à 30e') du motif sur le capteur de lumière (46), qui est provoqué par une inclinaison du système optique (20) et pour utiliser celui-ci pour corriger les informations de position obtenues à partir du capteur de lumière (46).

5. Dispositif selon l'une des revendications précédentes, **caractérisé en ce que** la lumière polychromatique comprend un spectre discret ou plusieurs spectres continus qui sont spectralement espacés les uns des autres.

6. Dispositif selon l'une des revendications 1 à 4, **caractérisé en ce que** la lumière polychromatique comprend un spectre continu.

7. Procédé de mesure d'une grandeur nominale optique dépendant de la longueur d'onde d'un système optique, comprenant les étapes suivantes :
a) générer un motif de lumière polychromatique dans un plan objet (26) ;
b) former une image du motif sur un capteur de lumière à résolution spatiale (46) à l'aide du système optique (20) et de l'optique de mesure (33 ; 33'), dans lequel un élément optique dispersif (40) se trouve sur un chemin optique entre le système optique et le capteur de lumière de telle manière qu'une pluralité d'images (30a' à 30e') du motif présentant des longueurs d'onde différentes soient formées simultanément à différentes positions sur le capteur de lumière (46) ;
c) déterminer la grandeur nominale optique à partir de la pluralité d'images formées sur le capteur de lumière (46) .

8. Procédé selon la revendication 7, **caractérisé en ce que** le système optique (20), en association avec l'optique de mesure (33 ; 33'), génère une image intermédiaire du motif, dont l'image est formée sur le capteur de lumière (46).

9. Procédé selon la revendication 8, **caractérisé en ce que** l'optique de mesure forme en outre une image du plan objet sur un autre capteur de lumière (54) en association avec le système optique, dans lequel aucun élément optique dispersif n'est disposé sur le chemin optique de l'autre capteur de lumière (54).

10. Procédé selon la revendication 9, **caractérisé en ce qu'**un décalage des images (30a' à 30e') du motif sur le capteur de lumière (46), qui est provoqué par une inclinaison du système optique (20), est déduit de l'image du motif formée sur l'autre capteur de lumière (54) et est utilisé pour corriger les informations de position obtenues à partir du capteur de lumière (46).

11. Procédé selon l'une des revendications 7 à 10, **caractérisée en ce que** la lumière polychromatique comprend un spectre discret ou plusieurs spectres continus qui sont spectralement espacés les uns des autres.
